# EUROPEAN PATENT APPLICATION

(11) **EP 3 723 011 A1**
(43) Date of publication of application: **14.10.2020**
(21) Application number: 20168999.9
(22) Date of filing: 09.04.2020
(51) Int. Cl.: G06Q 10/04, G06Q 10/00

(54) **FAILURE PREDICTION DEVICE, FAILURE PREDICTION METHOD, COMPUTER PROGRAM, CALCULATION MODEL LEARNING METHOD, AND CALCULATION MODEL GENERATION METHOD**

(30) Priority: 09.04.2019 JP 2019074252
(71) Applicant: Nabtesco Corporation, Tokyo 102-0093 (JP)
(72) Inventor: KIKUCHI, Osamu, Chiyoda-ku, Tokyo 102-0093 (JP); INOUE, Hiroyuki, Chiyoda-ku, Tokyo 102-0093 (JP)
(74) Representative: Grünecker Patent- und Rechtsanwälte PartG mbB

(57) **Abstract**

A failure prediction device (1) includes: a plurality of failure prediction model units (10) that output a failure prediction result according to a value input to calculation models generated for different failure details based on operation information on operation up to the occurrence of the respective failures from operation history of a predetermined device; and an operation information input unit (20) that inputs operation information acquired from a device subjected to failure prediction to the plurality of failure prediction model units (10).

## Description

The present invention relates to a failure prediction device, a failure prediction method, a computer program, a calculation model learning method, and a calculation model generation method.

### 2. Description of the Related Art

There is a technology of generating a failure prediction model and predicting the occurrence of failure in a device (for example, Patent Document 1).

[Patent Document 1] Japanese Patent Application Publication No. 2018-72029

The technology described in Patent Document 1 performs machine learning using, as teacher data, a set of vibration information and a label indicating the time from when a component is started being used to when the component fails, thereby predicting how long it takes for failure to occur after the component is started to be used. This technology allows for the prediction of failure of an individual component such as a CPU using a BGA package; however, it does not allow for the accurate prediction of failure of a plurality of individual components. Further, since the basis of the failure prediction cannot be specified, the validity of the prediction cannot be confirmed.

In this background, a purpose of the present invention is to identify the basis of prediction for each failure in a plurality of types of failure prediction and to improve the accuracy of prediction for each failure.

A failure prediction device according to one embodiment of the present invention includes: a failure prediction model unit that outputs a failure prediction result for each failure detail according to a calculation model generated for each failure detail of a predetermined device based on history of operation information on operation up to the occurrence of the failure; and an operation information input unit that inputs at least a part of operation information of a device subjected to failure prediction to a plurality of failure prediction model units.

Another embodiment of the present invention relates to a failure prediction method. This method includes: acquiring at least a part of operation information of a device subjected to failure prediction from the device; and outputting a failure prediction result for each failure detail according to a calculation model generated, using the acquired operation information, for each failure detail of a predetermined device based on history of operation information on operation up to the occurrence of the failure.

Still another embodiment of the present invention relates to a computer program. This program is embedded on a non-transitory computer-readable recording medium and includes: a module that acquires at least a part of operation information of a device subjected to failure prediction from the device; and a module that outputs a failure prediction result for each failure detail according to a calculation model generated, using the acquired operation information, for each failure detail of a predetermined device based on history of operation information on operation up to the occurrence of the failure.

Still another embodiment of the present invention relates to a calculation model learning method. This methods includes: creating a data set for machine learning only from operation information related to a specific failure of a device; causing a parameter of a calculation model for failure prediction to be machine-learned based on the data set; creating another data set for machine learning only from operation information related to a failure different from the specific failure of a device; and causing a parameter of another calculation model for failure prediction to be machine-learned based on the other data set.

Still another embodiment of the present invention relates to a calculation model generation method. This method includes: creating a data set for machine learning only from operation information related to a specific failure of a device; causing a parameter of a calculation model for failure prediction to be machine-learned based on the data set; creating another data set for machine learning only from operation information related to a failure different from the specific failure of a device; and causing a parameter of another calculation model for failure prediction to be machine-learned based on the other data set.

Yet another embodiment of the present invention relates to a failure prediction method. This method includes: acquiring at least a part of operation information from a device subjected to failure prediction; and inputting at least a part of operation information of the device subjected to failure prediction to two or more calculation models in parallel so as to operate two or more calculation models at the same time, the calculation models each being generated for every two or more types of failure details of a predetermined device based on history of operation information on operation up to the occurrence of the respective failures.

Yet another embodiment of the present invention also relates to a failure prediction method. This method includes: inputting at least a part of operation information of a device subjected to failure prediction for each failure detail of a predetermined device to a plurality of calculation models generated based on history of operation information on operation up to the occurrence of the failure; and estimating an operating status that can cause a failure to occur based on a calculation model that indicates the highest possibility of a failure among the plurality of calculation models.

Optional combinations of the aforementioned constituting elements, and implementations of the invention in the form of methods, apparatuses, programs, transitory or non-transitory storage media, systems, and the like may also be practiced as additional modes of the present invention.

Embodiments will now be described, by way of example only, with reference to the accompanying drawings that are meant to be exemplary, not limiting, and wherein like elements are numbered alike in several figures, in which:
Fig. 1 is a functional block diagram showing the configuration of a failure prediction device according to the first embodiment;
Fig. 2 is a functional block diagram showing the configuration of a failure prediction device according to the second embodiment;
Fig. 3 is a flowchart of a failure prediction method according to the third embodiment;
Fig. 4 is a flowchart of a learning method according to the fifth embodiment; and
Fig. 5 is a flowchart of a failure prediction method according to the seventh embodiment.

The invention will now be described by reference to the preferred embodiments. This does not intend to limit the scope of the present invention, but to exemplify the invention.

Hereinafter, the present invention will be described based on preferred embodiments with reference to the drawings. The same or equivalent components, members, and processes shown in each drawing shall be denoted by the same reference numerals, and the duplicative description will be omitted as appropriate.

### [First Embodiment]

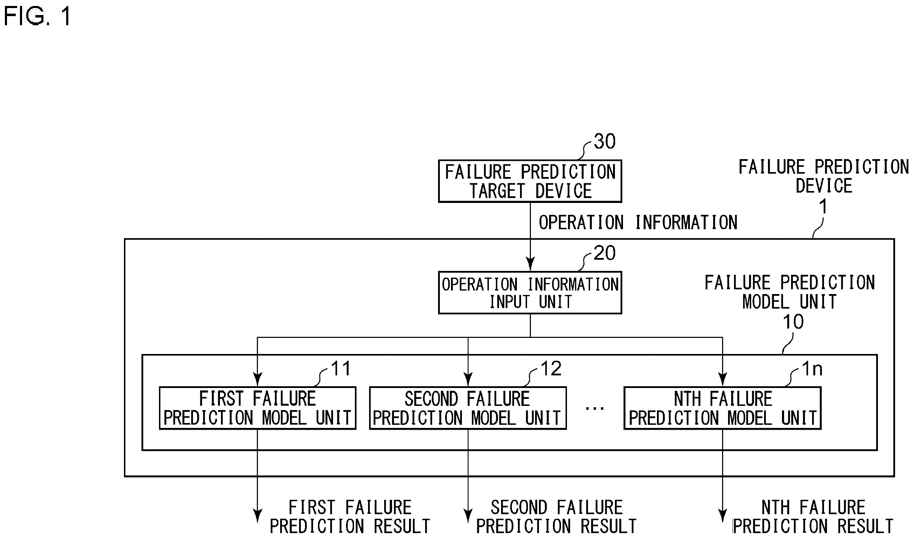

Fig. 1 is a functional block diagram showing the configuration of a failure prediction device 1 according to the first embodiment of the present invention. The failure prediction device 1 includes a failure prediction model unit 10 and an operation information input unit 20. The failure prediction model unit 10 has a plurality of failure prediction model units, that is, a first failure prediction model unit 11, a second failure prediction model unit 12, ..., an nth failure prediction model unit In. Here, n is an integer of 2 or more. The first failure prediction model unit 11 predicts the first failure detail, the second failure prediction model unit 12 predicts the second failure detail, ..., and the nth failure prediction model unit In predicts the nth failure detail. The operation information input unit 20 is connected to a failure prediction target device 30, which is a failure prediction target. The first failure detail, the second failure detail, ..., and the nth failure detail are failure details that are different from one another. Further, failure also refers to a state in which an abnormality has occurred although the abnormality has not resulted in failure such as a state of change from a redundant state to a non-redundant state, in addition to a state in which a function to be exhibited by the failure prediction target device 30 can no longer be exhibited.

The operation information input unit 20 acquires operation information of the failure prediction target device 30 from the failure prediction target device 30. The operation information input unit 20 inputs the obtained operation information to the failure prediction model unit 10. This operation information is input to each of the first failure prediction model unit 11, the second failure prediction model unit 12, ..., and the nth failure prediction model unit In. The "operation information" refers to information relating to the configuration, usage status, etc., of the device and the history thereof (time-series information). For example, the "operation information" refers to information such as the configuration of the components of the device, the configuration of a system to which the device belongs, and a use period, a use frequency, a use environment, a storage environment, a maintenance status, a repair status or a control status of the device.

The failure prediction model unit 10 outputs a failure prediction result corresponding to a value input to a calculation model of each failure prediction model unit. That is, the failure prediction model unit 10 outputs a prediction result regarding the first failure detail predicted by a calculation model (not shown) of the first failure prediction model unit 11, outputs a prediction result regarding the second failure detail predicted by a calculation model (not shown) of the second failure prediction model unit 12, ..., and outputs a prediction result regarding the nth failure detail predicted by a calculation model (not shown) of the nth failure prediction model unit In. The calculation models described above are generated based on respective pieces of operation information on operation up to the occurrence of a failure among pieces of operation information of a calculation model generation device described later. The operation information on operation up to the occurrence of a failure means operation information on operation happening immediately after the operation of the calculation model generation device is started until the occurrence of a failure but is not limited to this. The operation information on operation up to the occurrence of a failure may be operation information on operation happening immediately after the maintenance, repair, or the like of the calculation model generation device is performed until the occurrence of a failure, operation information on operation happening from a specific time or after a specific situation occurs until the occurrence of a failure, or operation information on operation happening immediately after the completion of the production of the calculation model generation device or immediately after the storage in a sales company or the like is started until the occurrence of a failure. Further, the concept of the operation information on operation up to the occurrence of a failure may include operation information for a predetermined period after the failure has occurred. The predetermined period may be, for example, a predetermined period such as 10 minutes after failure has occurred or a period until a specific situation such as repair occurs. As a result of including operation information for a predetermined period after failure has occurred, the amount of information increases, allowing more accurate prediction to be performed.

The "configuration of the components of the device" is information indicating what kind of components the device has and how those components are configured. This information reflects, in a calculation model, the number of components of the device and a failure factor related to the way the components are combined. The "configuration of a system to which the device belongs" is information regarding the configuration of a high-order system when the device is incorporated as an element in the high-order system. This information is, for example, information indicating where in the high-order system the device is located, what kind of devices are present in addition to the device, and how the device and other devices are structurally or functionally related. This information reflects a failure factor associated with the position of the device in the high-order system and the relationship with other devices in the calculation model. The "use period" is a period (hours or years) during which the device has been used up to the present time, starting from the time of manufacture, the start of use, or other starting points. The use period may be a period that has elapsed irrespective of the actual use or may be only a period during which the device is actually used. The former reflects a failure factor mainly associated with aging degradation in a calculation model, and the latter reflects a failure factor mainly associated with actual use in a calculation model. The "use frequency" is information regarding the degree to which the device is repeatedly used. The use frequency may be a simple time average of the number of uses in a certain period such as one week or one month or may be information including a distribution in periods of a high use frequency and periods of a low use frequency. This information reflects a failure factor associated with the degree to which the device is repeatedly used in a calculation model. The "use environment" is information regarding an external environment in a place where the device is used. This information includes, for example, temperature, humidity, climate classification, dust, corrosive environment, state of exposure to electromagnetic waves, radiation, and chemical substances, and power supply. This information reflects in a calculation model a failure factor associated with the external environment in the place where the device is used. The "storage environment" is information regarding an external environment in a place where the device is stored. This information includes, for example, temperature, humidity, climate classification, dust, corrosive environment, and state of exposure to electromagnetic waves, radiation, and chemical substances. This information reflects in a calculation model a failure factor associated with the external environment in the place where the device is stored. The "maintenance status" is information regarding the status of maintenance that the device has received. This information includes, for example, the number, frequency, and details of an inspection on the device, whether lubrication and/or replacement of components have occurred, whether disassembly has occurred, and whether the inspection is a periodic inspection or a failure-based inspection. This information reflects the effect of the device maintenance on failure in the calculation model. The "repair status" is information regarding the status of repair on the device. This information is, for example, the number, frequency, and details of repair on the device, the type and/or number of replacement components, and the skill level of the repairer. This information reflects the effect of the device repair on failure in the calculation model. The "control status" represents the details of control parameters set for the device, a signal and/or the details of information input to the device, a signal and/or information output by the device, and the like. This information reflects the effect of the device control on failure in the calculation model.

The generation of a calculation model of each failure prediction model unit of the failure prediction model unit 10 will now be described. These calculation models are generated by a known method such as machine learning using one or more calculation model generation devices. The calculation model generation device is the same type of device included in the failure prediction target device 30 or a device including the same type of device as the failure prediction target device 30. For example, the calculation model generation device is the failure prediction target device 30 itself, the same type of component included in the failure prediction target device 30, a system including the same type of device as the failure prediction target device 30 as an element, or the like. When machine learning is used, the prediction accuracy is improved by using many calculation model generation devices. Further, the failure prediction target device 30 itself may be included as one of the calculation model generation devices.

Hereinafter, an example will be described where three calculation models, that is, a first calculation model for predicting a first failure, a second calculation model for predicting a second failure, and a third calculation model for predicting a third failure are generated. For example, when the device is a robot, the first failure is a failure of a speed reducer of the robot, the second failure is a failure of a sensor of the robot, and the third failure is a failure of a control device of the robot. The first calculation model is generated by machine learning using, as teacher data, operation information on operation up to the occurrence of the first failure among pieces of operation information of the calculation model generation device. In the same way, the second calculation model is generated using, as teacher data, operation information on operation up to the occurrence of the second failure among the pieces of operation information of the calculation model generation device, and the third calculation model is generated using, as teacher data, operation information on operation up to the occurrence of the third failure among the pieces of operation information of the calculation model generation device. The machine learning may be any known supervised learning. For machine learning, a neural network may be used such as a convolutional neural network (CNN), a recurrent neural network (RNN), and a long short term memory (LSTM) network. In this case, neural networks that are different depending on each calculation model may be mixed while sharing a common input layer. Alternatively, if an explanatory variable can be determined for each failure detail, a decision tree may be used.

When the operation information is input, each calculation model generated in this way predicts the occurrence of a failure based on the calculation model. The first calculation model predicts the probability of the first failure occurring, for example, within one month, the second calculation model predicts the probability of the second failure occurring, for example, within one month, and the third calculation model predicts the probability of the third failure occurring, for example, within one month. Since each of these calculation models is generated based on teacher data specialized for each type of failure, it is more easy to determine the basis of the failure prediction, that is, information of which type and from what time among the pieces of operation information including a plurality of pieces of information (type and time) is affecting the failure and how much effect the information has on the failure. Therefore, it is possible to avoid the effect (for example, overlearning) of other information having low relevance with respect to the failure, and it is possible to predict each failure with high accuracy.

An operation example as viewed from the user of the failure prediction device 1 described above is as follows. The user inputs operation information of the failure prediction target device 30 including a plurality of components in the failure prediction device 1. This operation information may be a part or all of the actual operation history of the failure prediction target device 30 or may be virtual operation information. The failure prediction device 1 outputs the probability of a failure of the first component occurring, for example, within one month, the probability of a failure of the second component occurring, for example, within one month, ..., and the probability of a failure of the nth component occurring, for example, within one month. When the failure prediction target device 30 is used (or is assumed to be used) in a certain operation status, the user can learn which component will fail and when and at what probability the component will fail. The "operation status" refers to a status when the device is used and refers to, for example, the configuration of components of the device, the configuration of a system to which the device belongs, and a use period, a use frequency, a use environment, a storage environment, a maintenance status, a repair status or a control status of the device.

According to the present embodiment, since a calculation model generated based on teacher data specialized for each type of failure is used in a plurality of types of failure prediction, the accuracy of prediction for each failure can be improved.

### [Second Embodiment]

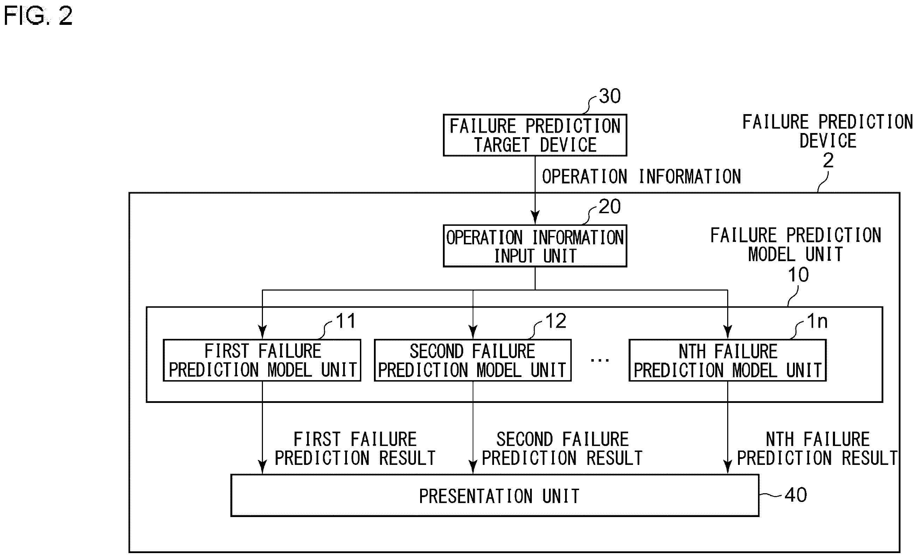

Fig. 2 is a functional block diagram showing the configuration of a failure prediction device 2 according to the second embodiment of the present invention. The failure prediction device 2 includes a presentation unit 40 in addition to the configuration of the failure prediction device 1 of Fig. 1

The presentation unit 40 presents differences between a calculation model corresponding to the most likely failure detail and calculation models corresponding to other failure details from among failure prediction results from the plurality of failure prediction model units, that is, the first failure prediction result, the second failure prediction result, ..., and the nth failure prediction result.

Hereinafter, an example will be described in which the failure prediction model unit 10 has three failure prediction models: a first failure prediction model unit 11; a second failure prediction model unit 12; and a third failure prediction model unit 13. The first failure prediction model unit 11, the second failure prediction model unit 12, and the third failure prediction model unit 13 respectively use a first calculation model, a second calculation model, and a third calculation model so as to perform failure prediction. It is assumed that as a result of the failure prediction, the first failure is predicted to occur within one month with a probability of 30%, the second failure is predicted to occur within one month with a probability of 10%, and the third failure is predicted to occur within one month with a probability of 5%. At this time, the probability of the occurrence of the first failure is the highest. Therefore, the presentation unit 40 presents the difference between the first calculation model and the second calculation model and the difference between the first calculation model and the third calculation model. By looking at the differences, the user can learn the difference in a prediction detail between a failure that most likely occurs and the other failures. Thereby, the validity of the prediction can be confirmed.

According to the present embodiment, since the difference in a prediction detail between a failure that most likely occurs and the other failures is presented, the validity of the prediction detail can be objectively confirmed.

In an exemplary embodiment of the second embodiment, each calculation model is generated based on the configuration of components of the same type of device as the failure prediction target device 30, the configuration of a system to which the same type of device as the failure prediction target device 30 belongs, and operation information of the same type of device as the failure prediction target device 30.

In another exemplary embodiment of the second embodiment, the difference between the calculation models presented by the presentation unit 40 is output as similarity between the operation information of the failure prediction target device 30 and the operation information of the calculation model generation device described above. The "similarity" is a numerical value or evaluation information indicating how common each element of an operation status is between the two devices.

As described above, the calculation model generation device is a device that includes the failure prediction target device 30 (or is included in the failure prediction target device 30), and a calculation model is generated based on operation information obtained when the device is used in various environments and configurations. For example, it is assumed that the probability of the occurrence of the first failure is predicted to be the highest as a result of the operation information of the failure prediction target device 30 being input to the failure prediction target device 30. At this time, by calculating the similarity between the operation information of the calculation model generation device included in the teacher data of the first calculation model for predicting the first failure and the operation information of the failure prediction target device 30, it is possible to clearly indicate the reason for failure (various environments and configurations) when the probability of the occurrence of the failure is high. The similarity can be evaluated based on how many pieces of information are there within a predetermined range among the pieces of operation information composed of many types of information. Also, the present invention is not limited to this, and the evaluation can be made based on the degree of similarity of a predetermined specific type of information.

According to this exemplary embodiment, the user can clearly understand the reason why a failure detail is presented as a highly-likely failure detail is because of the relationship with the teacher data of the calculation model.

### [Third Embodiment]

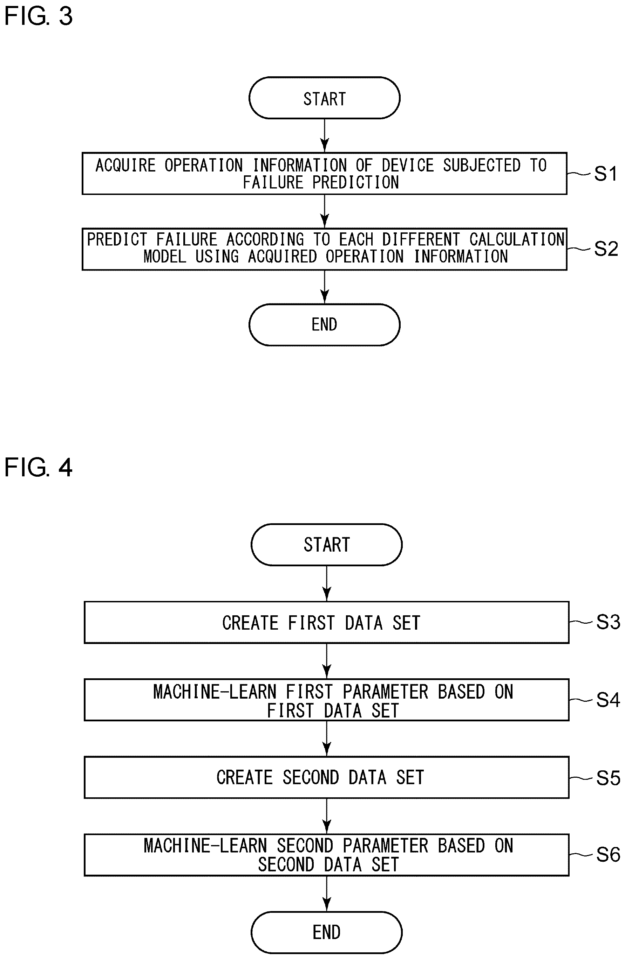

Fig. 3 is a flowchart of a failure prediction method according to the third embodiment of the present invention. The method includes an acquisition step S1 and a prediction step S2.

In the acquisition step S1, the present method includes acquiring operation information of a device subjected to failure prediction from the device.

In the prediction step S2, the present method includes inputting operation information acquired from the device subjected to failure prediction to each different calculation model generated based on a piece of operation information on operation up to the occurrence of a failure of a different detail among pieces of operation information of a predetermined device (calculation model generation device) so as to perform failure prediction. A calculation model generation method used here is the same as the one described in the first embodiment. Thus, a detailed description thereof will be omitted.

According to the present embodiment, since a calculation model generated based on teacher data specialized for each type of failure is used in a plurality of types of failure prediction, the accuracy of prediction for each failure can be improved.

### [Fourth Embodiment]

A computer program according to the fourth embodiment of the present invention causes a computer to execute a flow shown in Fig. 3. That is, the program causes a computer to perform the acquisition step S1 in which operation information of a device subjected to failure prediction is acquired from the device and the prediction step S2 of performing failure prediction in which operation information acquired from the device subjected to failure prediction is input to each different calculation model generated based on a piece of operation information on operation up to the occurrence of a failure of a different detail among pieces of operation information of a predetermined device (calculation model generation device) so as to perform failure prediction.

According to the present embodiment, since a program using a calculation model generated based on teacher data specialized for each type of failure in a plurality of types of failure prediction can be implemented in software, highly accurate failure prediction can be realized using a computer.

### [Fifth Embodiment and Sixth Embodiment]

Fig. 4 is a flowchart of a calculation model learning method (an invention of a learning method) according to the fifth embodiment of the present invention and a calculation model generation method (an invention of a calculation model manufacturing method) according to the sixth embodiment. The present method includes a first data set creation step S3, a first parameter creation step S4, a second data set creation step S5, and a second parameter creation step S6.

In the first data set creation step S3, the present method includes creating a first learning set only from operation information related to a specific failure of the device. For example, if the device is a robot, the specific failure is a failure of the speed reducer of the robot. The first learning set is, for example, a data set including only operation information on operation up to the occurrence of a failure in the speed reducer of the robot.

In the first parameter creation step S4, the present method includes causing the first parameter of the first calculation model for failure prediction to be machine-learned based on the first learning set. Machine learning is, for example, supervised learning using the first learning set as teacher data, such as a convolutional neural network, a recurrent neural network, an LSTM network, and the like. Through this machine learning, the first parameter of the first calculation model, that is, the parameter of the calculation model for predicting the failure of the speed reducer of the robot is learned.

In the second data set creation step S5, the present method includes creating a second learning set different from the first learning set only from operation information related to a failure that is different from the specific failure. For example, another failure is a failure of a sensor of the robot. The second learning set is, for example, a data set including only operation information on operation up to the occurrence of a failure in the sensor of the robot.

In the second parameter creation step S6, the present method includes causing a second parameter, which is different from the first parameter, of a second calculation model that is different from the first calculation model for failure prediction to be machine-learned based on the second learning set. Just like the first parameter of the first calculation model, the second parameter of the second calculation model, that is, the parameter of the calculation model for predicting the failure of the sensor of the robot is learned.

According to the present embodiment, since the teacher data specialized for a specific failure detail is used, adverse effects caused due to over-learning or the like can be suppressed as much as possible when a calculation model for failure prediction is learned. Further, since teacher data specialized for a specific failure detail is used, a calculation model for failure prediction can be generated that minimizes the adverse effects caused due to over-learning and the like.

### [Seventh Embodiment]

A method according to the seventh embodiment of the present invention includes inputting operation information acquired from a device subjected to failure prediction to a plurality of calculation models in parallel (input the operation information at almost the same time or input operation information so as to end arithmetic operations at almost the same time) so as to operate the calculation models at the same time.

The calculation models are created specifically for respective failure details, for example, by the method described in the fifth embodiment.

According to the present embodiment, since the operation information of the device subjected to the failure prediction is input to the calculation models specialized for the respective failures in parallel, failure prediction can be performed at a higher speed compared to a case where the operation information is input to the calculation models in turns. It is not necessary to operate all the calculation models at the same time, and only some of the calculation models can be executed at the same time.

### [Eighth Embodiment]

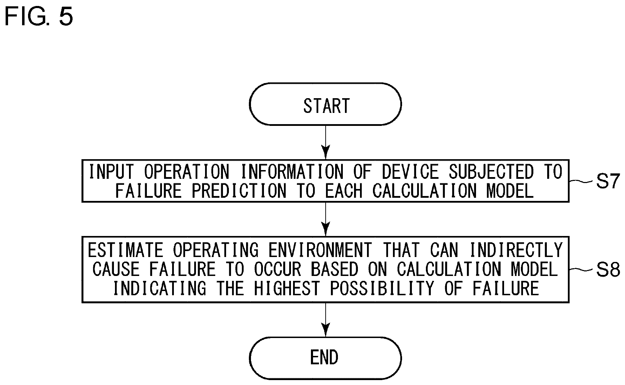

Fig. 5 is a flowchart of a failure prediction method according to the eighth embodiment of the present invention. The method includes an input step S7 and an estimation step S8.

In the input step S7, the present method includes inputting the operation information acquired from the device subjected to failure prediction to each of the plurality of calculation models.

In the estimation step S8, the present method includes estimating an operating status that can cause a failure to occur based on a calculation model that indicates the highest possibility of a failure among the plurality of calculation models. This estimation may be performed according to the differences among the respective pieces of teacher data of the calculation models (since those information that have a deep causal relationship with each failure out of the pieces of information included in the operation information are centralized in a certain range, the differences are identified based on what kind of information is centralized and what kind of information is not centralized, and whether or not the information is centralized may be determined based on a preset criterion or may be relatively determined from the variation of each information). For example, when the device is a robot, a failure of the speed reducer of the robot is assumed to be predicted as the most likely failure. At this time, in the estimation step S8, an operation status that may cause a failure of the speed reducer of the robot, for example, any one or more of a use period, a use frequency, a use environment, a storage environment, a maintenance status, a repair status or a control status, and the like of the robot when the speed reducer fails is estimated. As described above, the use period or the like of the robot when the speed reducer fails is information with a range.

According to the present embodiment, it is possible to estimate the operation status of the device when a specific failure occurs in the device.

The present invention has been described based on several embodiments. These embodiments are intended to be illustrative only, and it will be obvious to those skilled in the art that various modifications and changes can be developed within the scope of the claims of the present invention and that such modifications and changes are also within the scope of the claims of the present invention. Accordingly, the description and drawings herein should be treated as illustrative rather than limiting.

Further, the present invention is also applicable to machine tools, construction machines and work machines, aircrafts, railway vehicles, ships, automobiles, automatic doors, packaging machines, prostheses, wheelchairs, three-dimensional modeling devices, forming machines, and the like in addition to robots.

An explanation will be given in the following regarding exemplary variations. In the explanations of the exemplary variations, the same or equivalent constituting elements and members as those in the embodiment shall be denoted by the same reference numerals. Explanations that are the same as those in the embodiment are appropriately omitted, and an explanation will be given focusing on features that are different from those of the embodiment.

In the eighth embodiment, a mode has been described in which an operating status that can cause a failure to occur is estimated based on a calculation model that indicates the highest possibility of a failure among the plurality of calculation models. However, the present invention is not limited to this, and an operation status in which a failure is unlikely to occur may be estimated based on a calculation model indicating the lowest possibility of a failure. According to this exemplary variation, it is possible to estimate the operation status of the device when no specific failure occurs in the device.

Optional combinations of the aforementioned embodiment and exemplary variations will also be within the scope of the present invention. New embodiments resulting from the combinations have combined effects of the embodiments and exemplary variations that are combined.

## Claims

1. A failure prediction device (1) comprising:
a failure prediction model unit (10) that outputs a failure prediction result for each failure detail according to a calculation model generated for each failure detail of a predetermined device (30) based on history of operation information on operation up to the occurrence of the failure; and
an operation information input unit (20) that inputs at least a part of operation information of a device subjected to failure prediction to the failure prediction model unit (10) .

2. The failure prediction device (1) according to claim 1, comprising: a presentation unit (40) that presents the difference between a calculation model corresponding to the most likely failure detail and calculation models corresponding to other failure details from among failure prediction results output by the failure prediction model unit (10).

3. The failure prediction device (1) according to claim 2,
wherein the predetermined device (30) is the same as or the same kind of device as the device subjected to failure prediction, and
wherein the operation information is time-series information consisting of a combination including at least one of the configuration of components of the predetermined device (30), the configuration of a system to which the device belongs, and a use period, a use frequency, a storage environment, a use environment, a maintenance status, a repair status or a control status of the device.

4. The failure prediction device (1) according to claim 2,
wherein the difference between the calculation models is output as similarity between at least one of the configuration of components of a device acquiring the operation information that has been input, the configuration of a system to which the device belongs, and a use period, a use frequency, a use environment, a storage environment, a maintenance status, a repair status or a control status of the device and at least one of the configuration of components of the predetermined device (30) used for the generation of each calculation model, the configuration of a system to which the device belongs, and a use period, a use frequency, a use environment, a storage environment, a maintenance status, a repair status or a control status.

5. The failure prediction device (1) according to claim 3,
wherein the difference between the calculation models is output as similarity between
at least one of the configuration of components of a device acquiring the operation information that has been input, the configuration of a system to which the device belongs, and a use period, a use frequency, a use environment, a storage environment, a maintenance status, a repair status or a control status of the device and
at least one of the configuration of components of the predetermined device (30) used for the generation of each calculation model, the configuration of a system to which the device belongs, and a use period, a use frequency, a use environment, a storage environment, a maintenance status, a repair status or a control status.

6. A failure prediction method comprising:
acquiring at least a part of operation information of a device subjected to failure prediction from the device; and
outputting a failure prediction result for each failure detail according to a calculation model generated, using the acquired operation information, for each failure detail of a predetermined device (30) based on history of operation information on operation up to the occurrence of the failure.

7. A computer program, comprising:
a module that acquires at least a part of operation information of a device subjected to failure prediction from the device; and
a module that outputs a failure prediction result for each failure detail according to a calculation model generated, using the acquired operation information, for each failure detail of a predetermined device (30) based on history of operation information on operation up to the occurrence of the failure.

8. A calculation model learning method for failure prediction, comprising:
creating a data set for machine learning only from operation information related to a specific failure of a device;
causing a parameter of a calculation model for failure prediction to be machine-learned based on the data set;
creating another data set for machine learning only from operation information related to a failure different from the specific failure of a device; and
causing a parameter of another calculation model for failure prediction to be machine-learned based on the other data set.

9. A calculation model generation method for failure prediction, comprising:
creating a data set for machine learning only from operation information related to a specific failure of a device;
causing a parameter of a calculation model for failure prediction to be machine-learned based on the data set;
creating another data set for machine learning only from operation information related to a failure different from the specific failure of a device; and
causing a parameter of another calculation model for failure prediction to be machine-learned based on the other data set.

10. A failure prediction method comprising:
acquiring at least a part of operation information from a device subjected to failure prediction; and
inputting at least a part of operation information of the device subjected to failure prediction to two or more calculation models in parallel so as to operate two or more calculation models at the same time, the calculation models each being generated for every two or more types of failure details of a predetermined device (30) based on history of operation information on operation up to the occurrence of the respective failures.

11. A failure prediction method comprising:
inputting at least a part of operation information of a device subjected to failure prediction for each failure detail of a predetermined device (30) to a plurality of calculation models generated based on history of operation information on operation up to the occurrence of the failure; and
estimating an operating status that can cause a failure to occur based on a calculation model that indicates the highest possibility of a failure among the plurality of calculation models.
